# EUROPEAN PATENT APPLICATION

(11) **EP 4 474 736 A1**
(43) Date of publication of application: **11.12.2024**
(21) Application number: 23765895.0
(22) Date of filing: 03.03.2023
(51) Int. Cl.: F25D 11/00

(54) **REFRIGERATOR STAND AND REFRIGERATOR HAVING SAME, AND AUTOMOBILE**

(30) Priority: 09.03.2022 CN 202220505946 U; 18.03.2022 CN 202220608111 U
(71) Applicant: Beijing Chehejia Automobile Technology Co., Ltd., Beijing 101300 (CN)
(72) Inventor: ZHANG, Ziwen, Beijing 101300 (CN); QIU, Peng, Beijing 101300 (CN); LIN, Meisui, Beijing 101300 (CN)
(74) Representative: Loo, Chi Ching
(86) International application number: PCT/CN2023/079502
(87) International publication number: WO 2023/169317

(57) **Abstract**

A refrigerator stand (1), comprising a first stand body (11), a second stand body (12) and a fastener (13), wherein the first stand body (11) is arranged on one side of the second stand body (12) in a height direction; the first stand body (11) is detachably connected to the second stand body (12) by means of the fastener (13); by means of enclosing of the first stand body (11) and the second stand body (12), a mounting cavity (14) is formed therebetween; and one side of the mounting cavity (14) is provided with a placement opening (15).

## Description

### CROSS-REFERENCE TO RELATED APPLICATIONS

The present application is filed on the basis of and claims the priority of Chinese patent application No. 202220505946.3 filed on March 9th, 2022, and Chinese patent application No.202220608111.0 filed on March 18th, 2022, the entire contents of both of which are incorporated herein by reference.

### TECHNICAL FIELD

The present disclosure relates to the technical field of refrigeration equipment and more particularly, to a refrigerator bracket, a refrigerator having the same and an automobile.

### BACKGROUND

Refrigerators are the most common household appliance that is responsible for keeping food fresh for users. A refrigerator bracket capable of supporting and protecting a cabinet of a refrigerator is usually provided outside the cabinet of the refrigerator, thereby achieving better use effect of the refrigerator. However, the structure of the refrigerator bracket in the related art is complex, the assembly thereof is cumbersome, and the production cost is high.

### SUMMARY

The present disclosure aims to solve one of the technical problems in the related art at least to some extent.

To this end, an embodiment of the present disclosure provides a refrigerator bracket with a simple structure, reasonable design and low production cost.

An embodiment according to a second aspect of the present disclosure further provides a refrigerator.

An embodiment according to a third aspect of the present disclosure further provides an automobile.

The refrigerator bracket according to an embodiment of the present disclosure includes: a first frame, a second frame and fasteners, wherein the first frame is disposed on a side of the second frame in a height direction, and the first frame is detachably connected to the second frame by the fasteners, and an installation cavity is enclosed between the first frame and the second frame, and a placement opening is disposed on one side of the installation cavity.

According to the refrigerator bracket of the embodiment of the present disclosure, the installation cavity is enclosed by the first frame and the second frame, and the first frame is detachably connected to the second frame, so that the number of components can be reduced, and the structure is simple, the assembly is convenient, and the production cost is low.

In some embodiments, the first frame is provided with a plurality of first installation sites, at least some of the plurality of first installation sites are spaced apart in a first direction, and the first direction is orthogonal to a length direction and the height direction of the first frame, the second frame is provided with a plurality of second installation sites. The plurality of first installation sites is in one-to-one correspondence with the plurality of second installation sites, and the fasteners are connected to the first installation sites and the second installation sites.

In some embodiments, the plurality of first installation sites are divided into a plurality of groups, each group of first installation sites includes at least two first installation sites spaced apart along the length direction of the first frame, and the plurality of groups of first installation sites are spaced apart in the first direction.

In some embodiments, an outer wall surface of the first frame is provided with a first groove opening upward and a second groove opening downward, the first groove and the second groove form the first installation site, and the first groove and the second groove are spaced apart in an up and down direction; a top of the second frame is provided with a protrusion, the protrusion forms the second installation site and extends into the second groove, one end of the fastener is located in the first groove, and the other end of the fastener is connected to the protrusion.

In some embodiments, the first frame includes a first side wall, a bottom wall, a second side wall and a third side wall; the bottom wall extends from an outer wall surface of the first side wall along the first direction, a lower end of the second side wall is connected to a free end of the bottom wall, the first groove is formed among the first side wall, the bottom wall and the second side wall, an upper end of the third side wall is connected to the free end of the bottom wall, and the second groove is formed between the bottom wall and the third side wall.

In some embodiments, a height of the second side wall is less than a height of the first side wall.

In some embodiments, a lower end of the second frame is provided with a first installation plate and a second installation plate that are spaced apart to define an installation space.

In some embodiments, at least one of the first installation plate and the second installation plate is provided with a heat dissipation hole.

In some embodiments, at least one of the first frame and the second frame is an injection molding part.

A refrigerator according to an embodiment of a second aspect of the present disclosure includes a cabinet and a refrigerator bracket, where the refrigerator bracket is the refrigerator bracket of any one of the above embodiments, and the cabinet is provided in the installation cavity.

According to the refrigerator bracket of the embodiment of the present disclosure, the installation cavity is enclosed by the first frame and the second frame, and the first frame is detachably connected to the second frame, so that the number of components can be reduced, and the structure is simple, the assembly is convenient, and the production cost is low.

An automobile according to an embodiment of a third aspect of the present disclosure includes a vehicle body and a refrigerator. The refrigerator is the refrigerator described in the above embodiments, and the refrigerator is disposed on the vehicle body.

### BRIEF DESCRIPTION OF THE DRAWINGS

FIG. 1 is a schematic diagram illustrating a refrigerator according to an embodiment of the present disclosure.
FIG. 2 is a schematic diagram illustrating the refrigerator viewed from another perspective according to the embodiment of the present disclosure.
FIG. 3 is a schematic diagram illustrating a refrigerator bracket according to an embodiment of the present disclosure.
FIG. 4 is a schematic diagram illustrating the refrigerator bracket viewed from another perspective according to the embodiment of the present disclosure.
FIG. 5 is a schematic diagram illustrating a first frame of the refrigerator bracket according to an embodiment of the present disclosure.
FIG. 6 is a schematic diagram illustrating a second frame of the refrigerator bracket according to an embodiment of the present disclosure.
FIG. 7 is a partial cross-sectional view illustrating a connection between the first frame and the second frame of the refrigerator bracket according to an embodiment of the present disclosure.
FIG. 8 is a schematic diagram illustrating a refrigerator according to an embodiment of the present disclosure with the refrigerator bracket being removed.
FIG. 9 is a schematic diagram illustrating a cabinet and an evaporator of the refrigerator according to an embodiment of the present disclosure.
FIG. 10 is an assembly schematic diagram of a drawer and a door panel of the refrigerator according to an embodiment of the present disclosure.

### Reference signs:

1. Refrigerator bracket; 11. First frame; 111. First installation site; 112. First groove; 113. Second groove; 114. First side wall; 115. Bottom wall; 116. Second side wall; 117. Third side wall; 12. Second frame; 121. Second installation site; 122. First installation plate; 123. Second installation plate; 124. Third installation site; 125. Fourth installation site; 126. Protrusion; 13. Fastener; 14. Installation cavity; 15. Placement opening; 16. Reinforcing rib;
2. Cooling fan;
3. Cabinet; 31. Storage room; 32. Pick-up port;
4. Refrigeration module; 41. Evaporator; 42. Compressor;
51. Drawer; 52. Door panel; 53. Drive motor;
6. Control box.

### DETAILED DESCRIPTION

Embodiments of the present disclosure are described in detail below, and examples of the embodiments are shown in the accompanying drawings. The embodiments described below with reference to the accompanying drawings are exemplary and intended to be used for explaining the present disclosure, and should not be understood as limiting the present disclosure.

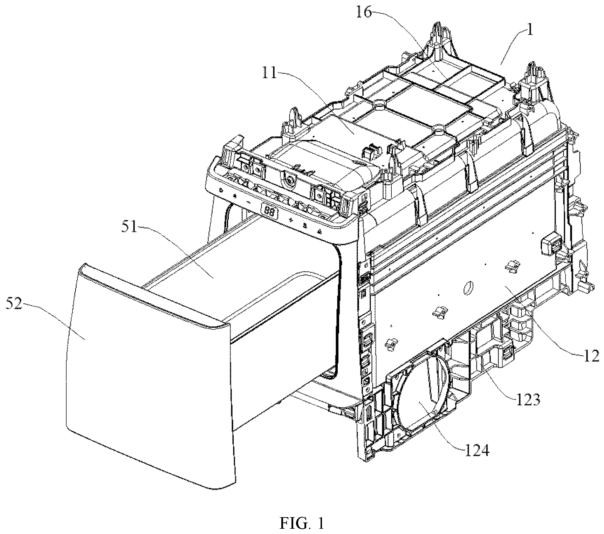

A refrigerator bracket 1, a refrigerator having the same and an automobile according to embodiments of the present disclosure will be described below with reference to FIG. 1 to FIG. 10.

As shown in FIG. 1 to FIG. 7, the refrigerator bracket 1 according to an embodiment of the present disclosure includes: a first frame 11, a second frame 12 and fasteners 13. The first frame 11 is disposed on a side of the second frame 12 in a height direction, and the first frame 11 is detachably connected to the second frame 12 by the fasteners 13. An installation cavity 14 is enclosed by the first frame 11 and the second frame 12, and a placement opening 15 is disposed on one side of the installation cavity 14.

According to the refrigerator bracket 1 of the embodiment of the present disclosure, the installation cavity 14 is enclosed by the first frame 11 and the second frame 12, and the first frame 11 and the second frame 12 are detachably connected, so that the number of components can be reduced, and the structure is simple, the assembly is convenient, and the production cost is low.

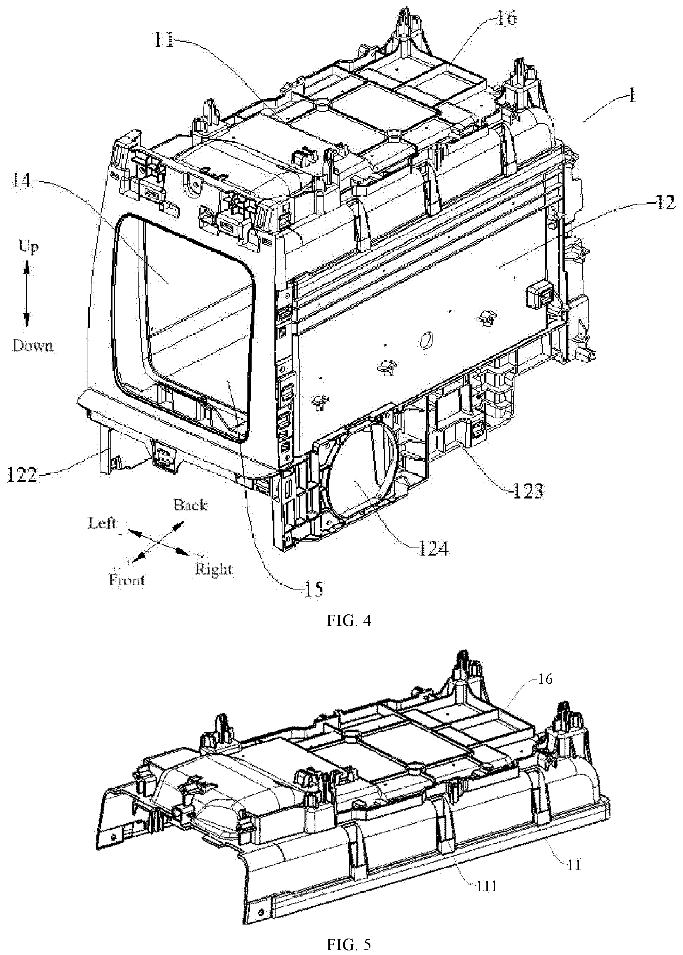

In some embodiments, as shown in FIG. 4 to FIG. 7, a plurality of first installation sites 111 are disposed on the first frame 11, among the plurality of first installation sites 111, at least some of the first installation sites 111 are spaced apart in a first direction (the left-to-right direction shown in FIG. 4). A plurality of second installation sites 121 that are in one-to-one correspondence with the plurality of first installation sites 111 are disposed on the second frame 12, and the fasteners 13 are connected to the first installation sites 111 and the second installation sites 121.

For example, each of the first installation sites 111 is a through hole, each of the second installation sites 121 is a threaded groove, and the fastener 13 is a threaded member that passes through the through hole and is screwed into the threaded groove. Since there are a plurality of first installation sites 111 and second installation sites 121, the firmness of the connection between the first frame 11 and the second frame 12 can be improved.

In some embodiments, as shown in FIG. 1 to FIG. 7, at least one of the first frame 11 and the second frame 12 is an injection molding member. In some embodiments, the first frame 11 and the second frame 12 are both injection molding members. For example, the first frame 11 is injection molding of PA6+GF30 material, and the second frame 12 is injection molding of PC+ABS material, which is beneficial to a lightweight design of the refrigerator bracket 1 and reduces the weight of the refrigerator.

In some embodiments, the plurality of first installation sites 111 are divided into a plurality of groups, each group of first installation sites 111 includes at least two first installation sites 111 spaced apart in a length direction of the first frame 11 (the front-to-back direction shown in FIG. 4), and the plurality of groups of first installation sites 111 are spaced apart in the first direction (the left-to-right direction shown in FIG. 4).

In some embodiments, as shown in FIG. 4, the plurality of first installation sites 111 are divided into two groups, the two groups of first installation sites 111 are disposed opposite to each other on the left side and the right side of the first frame 11, and each group of first installation sites 111 includes three first installation sites 111 spaced apart in the front-to-back direction. It can be understood that after each group of first installation sites 111 and the corresponding second installation sites 121 are connected by the fasteners 13, the movement and rotation between the first frame 11 and the second frame 12 are restricted. After the plurality of groups of first installation sites 111 and the corresponding second installation sites 121 are connected by the fasteners 13, the restriction effect is further improved and a plurality of fasteners 13 share the shear force.

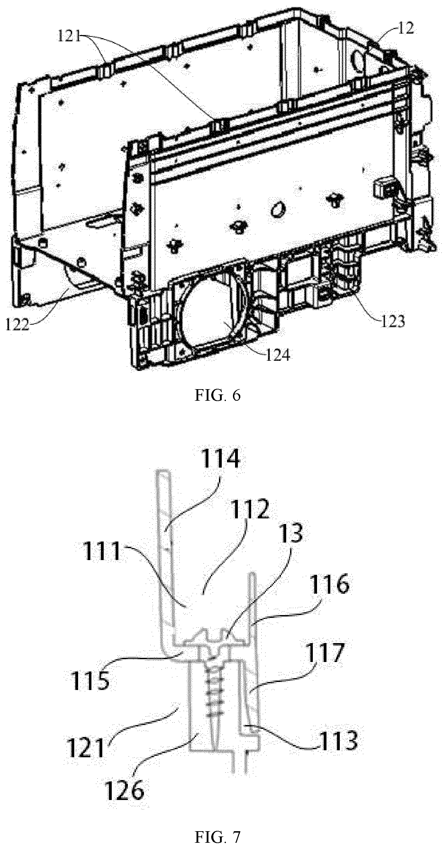

In some embodiments, as shown in FIG. 7, an outer wall of the first frame 11 is provided with a first groove 112 opening upward and a second groove 113 opening downward, the first groove 112 and the second groove 113 form the first installation site. The first groove 112 and the second groove 113 are spaced apart in the up-to-down direction. The top of the second frame 12 includes a protrusion 126 that forms the second installation site 121 and extends into the second groove 113. One end of the fastener 13 is located in the first groove 112, and the other end of the fastener 13 is connected to the protrusion 126. It can be understood that when the first frame 11 and the second frame 12 are mounted, the first frame 11 is placed on the second frame 12 so that the protrusion 126 extends into the corresponding second groove 113, thereby achieving the alignment and pre-fixation of the first frame 11 and the second frame 12. Then, the fastener 13 is passed through the first installation site 111 and the second installation site 121 to fix the first frame 11 and the second frame 12, thereby reducing the assembly difficulty of the refrigerator bracket 1 and improving the production efficiency.

In some embodiments, as shown in FIG. 7, the first frame includes a first side wall 114, a bottom wall 115, a second side wall 116 and a third side wall 117. The bottom wall 115 extends from the outer wall surface of the first side wall 114 along the first direction. The lower end of the second side wall 116 is connected to the free end of the bottom wall 115 (the right end as shown in FIG.7). The first groove 112 is formed among the first side wall 114, the bottom wall 115 and the second side wall 116. The upper end of the third side wall 117 is connected to the free end of the bottom wall 115. The second groove 113 is formed between the bottom wall 115 and the third side wall 117.

In some embodiments, the height of the second side wall 116 is less than the height of the first side wall 114, so as to prevent the second side wall 116 from interfering with the installation of the fastener 13.

In some embodiments, a first installation plate 122 and a second installation plate 123 are provided at the lower end of the second frame 12, and the first installation plate 122 and the second installation plate 123 are spaced apart to define an installation space.

In some embodiments, as shown in FIG. 4, the length direction of the first installation plate 122 is disposed along the front-to-back direction, the length direction of the second installation plate 123 is disposed along the front-to-back direction, and the first installation plate 122 and the second installation plate 123 are arranged opposite to each other on a left side and a right side of the second frame 12.

In some embodiments, at least one of the first installation plate 122 and the second installation plate 123 is provided with a heat dissipation hole. For example, both the first installation plate 122 and the second installation plate 123 are provided with a heat dissipation hole.

In some embodiments, the first installation plate 122 and/or the second installation plate 123 are integrally formed with the second frame 12. For example, the first installation plate 122 is integrally formed with the left side plate of the second frame 12, and the second installation plate 123 is integrally formed with the right side plate of the second frame 12. It can be understood that the second frame 12 and the installation plate 17 are integrally formed, thereby reducing the number of assembled components and reducing the difficulty of assembly.

In some embodiments, the second frame 12 is provided with a third installation site 124 that is located on the first installation plate 122 and/or the second installation plate 123. For example, the third installation site 124 is located on the first installation plate 122 and the second installation plate 123, and components such as a cooling fan 2 and a compressor 42 can be mounted at the third installation site 124, so that other auxiliary components of the refrigerator can be fixed to the refrigerator bracket 1. Accordingly, the structure of the refrigerator is compact, and there is no need to mount other brackets for fixing components, thereby reducing the production costs.

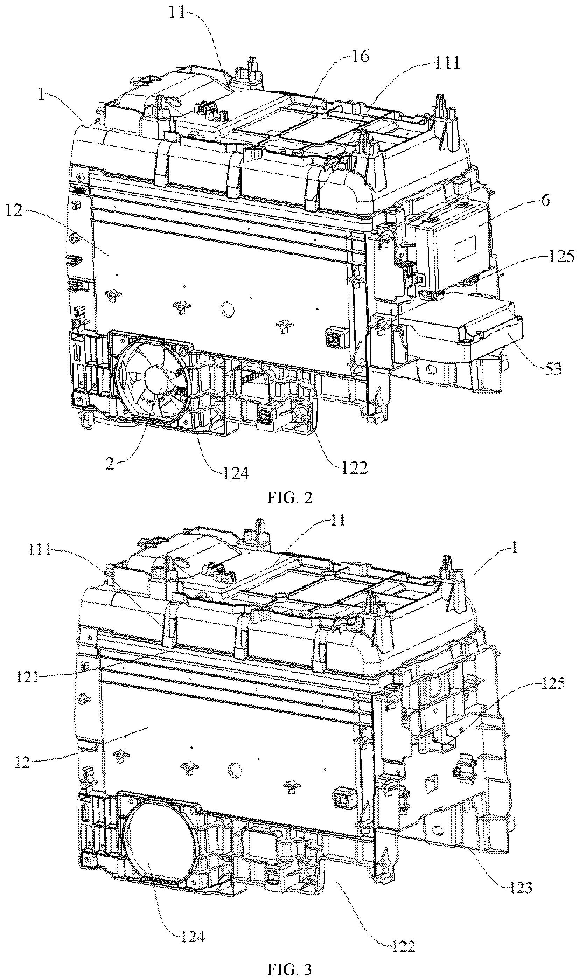

In some embodiments, as shown in FIG. 2 and FIG. 3, a fourth installation site 125 for installing components of the refrigerator is disposed on a side wall of the second frame 12 away from the placement opening 15. It can be understood that a back surface of the second frame 12 is provided with the fourth installation site 125, on which a control box 6 for controlling the operation of the refrigerator by a user can be mounted, and/or a drive motor 53 for driving opening and closing the door of the refrigerator can also be mounted, so that the use effect of the refrigerator bracket 1 can be better.

In some embodiments, as shown in FIG. 1 to FIG. 4, at least one of the first frame 11 and the second frame 12 is provided with a reinforcing rib 16. For example, both the first frame 11 and the second frame 12 are provided with the reinforcing rib 16. When the first frame 11 and the second frame 12 are injecting, the reinforcing rib 16 can be formed on the first frame 11 and the second frame 12 by injection molding, thereby improving the connection strength of the first frame 11 and the second frame 12 and extending the service life of the refrigerator bracket 1.

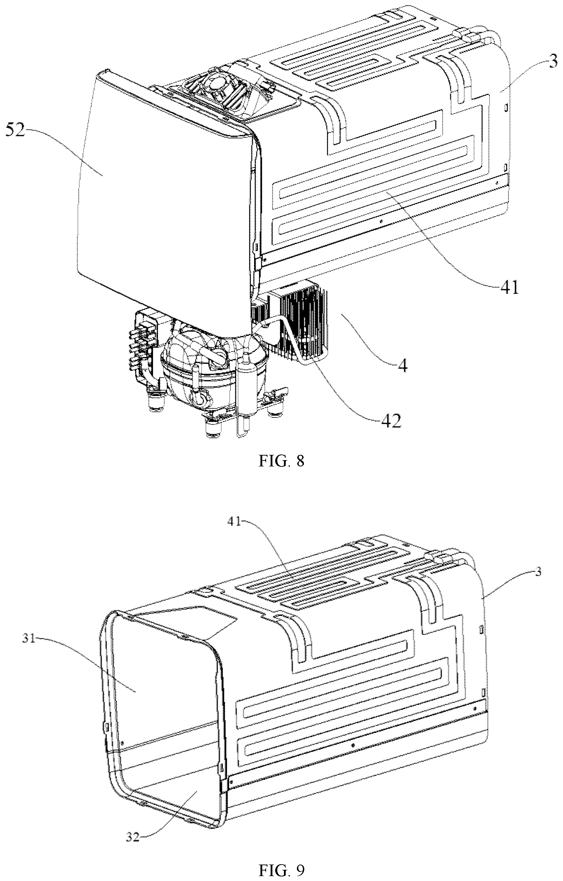

As shown in FIG. 1 and FIG. 8, a refrigerator according to an embodiment of the second aspect of the present disclosure includes a cabinet 3 and a refrigerator bracket 1. The refrigerator bracket 1 is the refrigerator bracket 1 of the embodiment of the present disclosure, and the cabinet 3 is disposed in the installation cavity 14. It can be understood that the cabinet 3 can be placed in the installation cavity 14 through the placement opening 15.

According to the refrigerator of the embodiment of the present disclosure, an installation cavity 14 is enclosed by the first frame 11 and the second frame 12, and the first frame 11 and the second frame 12 are detachably connected, so that the number of components can be reduced, and the structure is simple, the assembly is convenient, and the production cost is low.

In some embodiments, as shown in FIG. 8, the refrigerator further includes a refrigeration module 4 including an evaporator 41 and a compressor 42. The compressor 42 is connected to the evaporator 41, and the compressor 42 is located outside the cabinet 3. The compressor 42 can exchange energy with the evaporator 41. The evaporator 41 is covered on the outer peripheral wall of the cabinet 3, and the evaporator 41 can transfer cooling energy to the inside of the cabinet 3. For example, the evaporator 41 includes a cooling pipe that is coiled on the outer peripheral wall of the cabinet 3, so as to improve the refrigeration effect of the refrigerator.

As shown in FIG. 9, the cabinet 3 includes a storage room 31, and the side wall of the cabinet 3 is provided with a pick-up port 32 communicated with the storage room 31. The refrigerator further includes a drawer 51 connected to the cabinet 3, and the drawer 51 can move between an open position and a closed position. In the open position, the drawer 51 extends out to the pick-up port 32, and in the closed position, the drawer 51 is located in the storage room 31. It can be understood that the drawer 51 is a hollow structure, and items can be placed in the drawer 51 and then sent to the storage room 31 for refrigeration. When it is necessary to take or store items in the storage room 31, the user can pull the drawer 51 out of the storage room 31, so that it is convenient for the user to operate and the use effect is better.

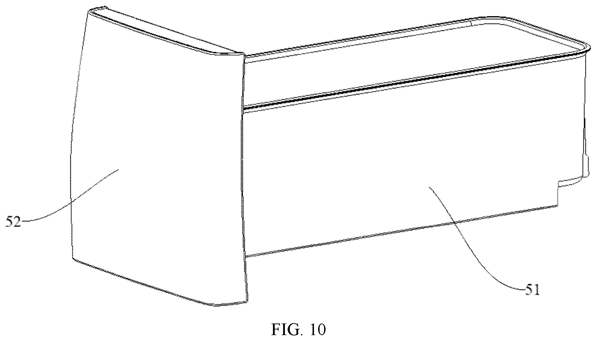

In some embodiments, as shown in FIG. 1 and FIG. 10, the refrigerator further includes a door panel 52 connected to the drawer 5. In the closed position, the door panel 52 closes the pick-up port 32. In some embodiments, the drawer 51 and the door panel 52 are detachably connected. For example, the drawer 51 is connected to the door panel 52 by a screw or a clamping structure, so that it is easy to manufacture and assemble. Alternatively, the drawer 51 and the door panel 52 are integrally formed, so that the structural strength is high and the service life is long.

An automobile according to an embodiment of the third aspect of the present disclosure includes a vehicle body and a refrigerator 3 that is the refrigerator 3 of the embodiment of the second aspect of the present disclosure. The refrigerator 3 is disposed on the vehicle body. It can be understood that the refrigerator 3 can be mounted on the vehicle body through the refrigerator bracket 1.

In the description of the present disclosure, it should be understood that orientations or positional relationships indicated by terms, such as "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", are based on the orientations or positional relationships shown in the accompanying drawings, and are only for the convenience of describing the present disclosure and simplifying the description, and do not indicate or imply that a device or element to which the orientations or positional relationships referred must have a specific orientation, be constructed and operated in a specific orientation, and therefore should not be understood as a limitation on the present disclosure.

In addition, the terms "first" and "second" are merely used for descriptive purposes and should not be understood as indicating or implying relative importance or implicitly indicating the number of technical features indicated. Thus, a feature defined as "first" or "second" may explicitly or implicitly include at least one of the features. In the description of the present disclosure, "plurality" means at least two, for example, two, three, etc., unless otherwise clearly and specifically defined.

In the present disclosure, unless otherwise clearly stipulated and limited, terms such as "mounted", "communicated", "connected", "fixed" and the like should be understood in a broad sense. For example, it can be a fixed connection, a detachable connection, or an integral structure; it can be a mechanical connection, an electrical connection, or communicative with each other; it can be directly connected or indirectly connected through an intermediate medium; it can be the internal connection of two elements or the interaction relationship between two elements, unless otherwise clearly limited. For those skilled in the art, the specific meanings of the above terms in the present disclosure can be understood according to specific circumstances.

In the present disclosure, unless otherwise clearly specified and limited, a first feature being "on"/"below" a second feature may mean that the first and second features are in direct contact with each other, or the first and second features are in indirect contact with each other through an intermediate medium. Moreover, a first feature being "above", "on" and "on top" of the second feature may mean that the first feature is directly above or obliquely above the second feature, or simply means that the first feature is at a higher horizontal height than the second feature. A first feature being "below" or "beneath" a second feature may mean that the first feature is directly below or diagonally below the second feature, or simply means that the first feature is at a lower horizontal height than the second feature.

In the present disclosure, the terms "one embodiment", "some embodiments", "example", "specific example", or "some examples" etc. mean that the specific features, structures, materials or characteristics described in conjunction with the embodiment or examples are included in at least one embodiment or example of the present disclosure. In this specification, the schematic representations of the above terms do not necessarily refer to the same embodiment or example. Moreover, the specific features, structures, materials or characteristics described can be combined in any one or more embodiments or examples in a suitable manner. Furthermore, those skilled in the art may combine and associate different embodiments or examples and features of different embodiments or examples described in this specification without mutual contradiction.

Although the above embodiments have been illustrated and described, it can be understood that the above embodiments are exemplary and should not to be construed as limitations of the present disclosure. Changes, modifications, substitutions and variations of the above embodiments by those skilled in the art are all within the scope of protection of the present disclosure.

## Claims

1. A refrigerator bracket, comprising: a first frame, a second frame and fasteners, **characterized in that** the first frame is disposed on a side of the second frame in a height direction, the first frame is detachably connected to the second frame by the fasteners, an installation cavity is enclosed between the first frame and the second frame, and a placement opening is disposed on one side of the installation cavity.

2. The refrigerator bracket according to claim 1, **characterized in that** the first frame is provided with a plurality of first installation sites, at least some of the plurality of first installation sites are spaced apart in a first direction, and the first direction is orthogonal to a length direction and a height direction of the first frame; the second frame is provided with a plurality of second installation sites that are in one-to-one correspondence with the plurality of first installation sites, and the fasteners are connected to the first installation sites and the second installation sites.

3. The refrigerator bracket according to claim 2, **characterized in that** the plurality of first installation sites are divided into a plurality of groups, each group of first installation sites comprises at least two first installation sites spaced apart along the length direction of the first frame, and the plurality of groups of first installation sites are spaced apart in the first direction.

4. The refrigerator bracket according to claim 2, **characterized in that** an outer wall surface of the first frame is provided with a first groove opening upward and a second groove opening downward, the first groove and the second groove form the first installation site, and the first groove and the second groove are spaced apart in an up and down direction; a top of the second frame is provided with a protrusion, the protrusion forms the second installation site and extends into the second groove, one end of the fastener is located in the first groove, and the other end of the fastener is connected to the protrusion.

5. The refrigerator bracket according to claim 4, **characterized in that** the first frame comprises a first side wall, a bottom wall, a second side wall and a third side wall; the bottom wall extends from an outer wall surface of the first side wall along the first direction, a lower end of the second side wall is connected to a free end of the bottom wall, the first groove is formed among the first side wall, the bottom wall and the second side wall, an upper end of the third side wall is connected to the free end of the bottom wall, and the second groove is formed between the bottom wall and the third side wall.

6. The refrigerator bracket according to claim 5, **characterized in that** a height of the second side wall is less than a height of the first side wall.

7. The refrigerator bracket according to any one of claims 1 to 6, **characterized in that** a lower end of the second frame is provided with a first installation plate and a second installation plate that are spaced apart to define an installation space.

8. The refrigerator bracket according to claim 7, **characterized in that** at least one of the first installation plate and the second installation plate is provided with a heat dissipation hole.

9. The refrigerator bracket according to any one of claims 1 to 8, **characterized in that** at least one of the first frame and the second frame is an injection molding member.

10. A refrigerator, **characterized in that** the refrigerator comprises a cabinet and a refrigerator bracket; and
the refrigerator bracket is the refrigerator bracket according to any one of claims 1 to 9, and the cabinet is disposed in the installation cavity.

11. An automobile, comprising a vehicle body and a refrigerator, **characterized in that** the refrigerator is disposed on the vehicle body, and the refrigerator is the refrigerator according to claim 10.
